# EUROPEAN PATENT APPLICATION

(11) **EP 1 276 261 A2**
(43) Date of publication of application: **15.01.2003**
(21) Application number: 02396112.1
(22) Date of filing: 03.07.2002
(51) Int. Cl.: H04J 3/04

(54) **Method and arrangement for transmitting digital data**

(30) Priority: 09.07.2001 FI 20011493
(71) Applicant: Aplicom OY, 00440 Helsinki (FI)
(72) Inventor: Tuominen, Jyrki, 41290 Kangashäkki (FI)
(74) Representative: Tanhua, Pekka Vilhelm

(57) **Abstract**

The invention relates to a method for transmitting digital data, in which method a data sequence is read in parallel format (DR) into a transmitter, converted to serial format (DS), transmitted to the transmission path and received in serial format in the receiver, and converted back to the serial format (DR). According to the method, in the transmitter the conversion of a data sequence from parallel format (DR) into serial format (DS) is started by means of a first control signal (TSa), and the conversion is realized in a known fashion under control of a clock signal (CLK). The successive bits of the serial-format data sequence are calculated by clock signal pulses, and a second control signal (TSb) is formed when all bits in the data sequence are calculated and the data sequence has ended. To the receiver, there is transmitted the clock signal (SCLK) and the second control signal (TSb), and in the receiver the serial-format (DS) data sequence received by means of the clock signal (SCLK) is converted to parallel format (DR), and with the second control signal (TSb) the parallel data sequence is decoded further in the original parallel format. The invention also relates to a corresponding arrangement for transmitting digital data.

## Description

The invention relates to a method for transmitting digital data according to the preamble of claim 1.

The invention also relates to an arrangement for transmitting digital data according to the preamble of claim 6.

Data is transmitted through conductors between a suitable transmitter and receiver, either in parallel or in serial form. The advantage of parallel data transmission with respect to serial data transmission is a higher data transmission capacity and speed. However, a problem with parallel data transmission is that each bit of a parallel data sequence is transmitted through a specific conductor from the transmitter to the receiver. In serial data transmission, the bits of the data sequence are transmitted in succession through one conductor from the transmitter to the receiver. Parallel data transmission also is more susceptible to interference, particularly when the transmission distance grows. The cabling expenses of a parallel data transmission arrangement may also rise high owing to several parallel conductors.

In serial data transmission, there is generally used a number of data transmission solutions representing different standards. One of the best known may be the data transmission procedure, based on the standard RS-232, where the current 20 mA is interrupted at a chosen baud rate. Thus digital data is transmitted through one conductor at a predetermined rate. However, data transmission requires handshaking functions, for which several conductors are provided between the transmitter and the receiver. By means of the handshaking functions it is found out whether the receiver is ready to receive data, and whether the data transmission connection operates in general. A general description of said data transmission standard is given for instance in the book "The Art of Electronics", second edition, by Paul Horowich and Windfield 1995, pp. 723-726.

Standard serial data transmission methods are well suited for example to an office environment, to be used in the communication between a computer and its auxiliary devices, when data transmission rates are low or not higher than moderate. If the environment is susceptible to interference, problems arise in the data transmission, and standard solutions cannot necessarily be applied. One of the environments that are susceptible to interference is a vehicle.

The object of the invention is to eliminate the drawbacks connected to the described serial communication method. Another object of the invention is to realize a new method and arrangement for transmitting digital data.

The method according to the invention for transmitting digital data is characterized by what is set forth in the appended claim 1. Respectively, the arrangement according to the invention is characterized by what is set forth in the appended claim 6. The dependent claims describe preferred embodiments of the invention.

In the method according to the invention for transmitting digital data, a data sequence is read in parallel format in the transmitter, converted to serial format, transmitted to the transmission path and received in serial format in the receiver, whereafter it is converted back to parallel format. According to the invention, in the transmitter the conversion of a data sequence from parallel into serial format is started by a first control signal, and the conversion is realized according to a known method under control of a clock signal; the successive bits of the serial-format data sequence to be transmitted are most advantageously calculated by the clock signal pulses, and a second control signal is formed when all bits in the data sequence are calculated and the data sequence has ended; a clock signal and a second control signal are then transmitted to the receiver, and the serial format data sequence received by means of the clock signal in the receiver is converted to parallel format, and by means of the second control signal, the parallel data sequence is discharged further in the original parallel format.

An advantage of the invention is that there can be realized a simple and failure-resistant digital data transmission for low or average data transmission rates.

Another advantage of the invention is that the transmission path is realized by simple cabling and simple connections both in the transmitter and in the receiver.

A particular advantage of the invention is that there can be realized a controlled, synchronized data transmission, particularly serial-format data transmission.

Another particular advantage of the invention is that any handshaking operations between the transmitter and the receiver are not needed.

Yet another advantage of the invention is that the lowest possible transmission frequency can be used in the data transmission, so that also the interference emitted by the device can be minimized.

The method and arrangement according to the invention for transmitting digital data is in general suited to be applied in a data transmission arrangement between an input device, such as a keyboard or the like, and a computer, particularly in conditions that are susceptible to interference, for example in vehicles and generally in various industries.

The invention is described in more detail below with reference the appended drawings, where
- figure 1: is a block diagram illustrating an arrangement according to the invention for transmitting digital data,
- figure 2: is a circuit diagram of a transmitter and connected hardware elements,
- figure 3: is a circuit diagram of a receiver and connected hardware elements, and
- figure 4: is a synchronization diagram of the signals in the arrangement.

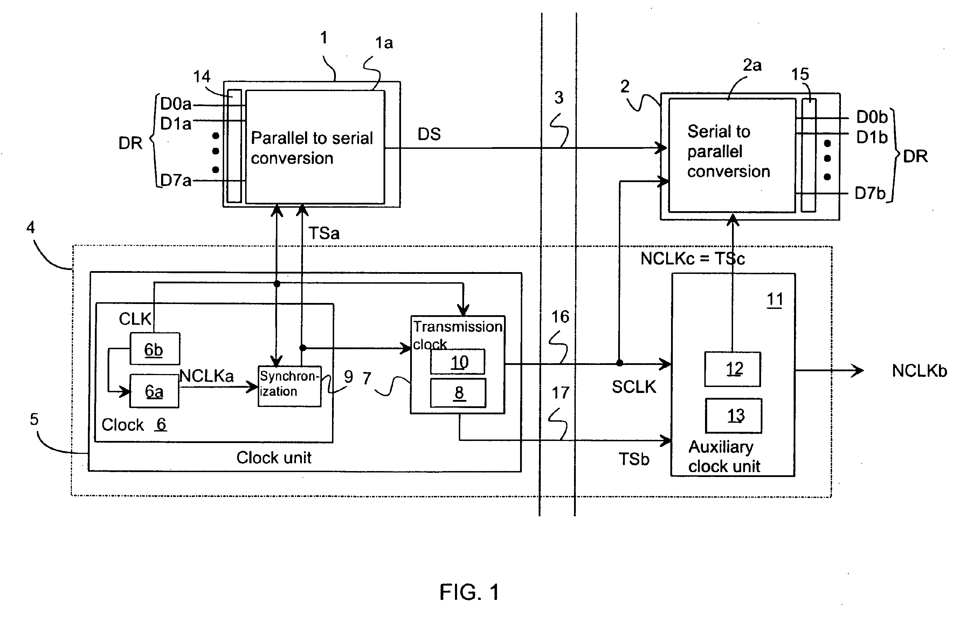

An arrangement according to the invention for transmitting digital data is illustrated as a block diagram in figure 1. The arrangement comprises a transmitter 1 and a receiver 2. The transmitter includes a parallel to serial converter 1a. A data sequence is read in parallel format DR: D0ₐ, D1ₐ, D2ₐ, ..., D7ₐ in the transmitter's parallel to serial converter 1a, where it is converted to serial format DS: D0ₐ, D1ₐ, D2ₐ, ..., D7ₐ , i.e. as a string of successive code elements. The serial-format data sequence DS is transmitted via a transmission path 3, such as a conductor, from the transmitter 1 to the receiver 2. The receiver 2 includes a serial to parallel converter 2a. The received serial-format data sequence DS is converted in the serial to parallel converter 2a to the original parallel format DR.

In addition, the arrangement comprises means 4 for synchronizing the transmission operation, i.e. transmission and reception. Said means 4 include a clock unit 5 arranged in connection with the transmitter 1. The clock unit 5 comprises at least a synchronizing unit 9, from the output of which there is obtained a first control signal TSa. In the embodiment according to figure 1, the clock unit 5 also comprises a clock 6 proper, from the output of which there is obtained the clock signal CLK. The first control signal TSa and the clock signal CLK are fed in the transmitter 1. By means of the first control signal TSa, there is started the conversion of the data sequence from parallel format DR to serial format DS in the parallel to serial converter 1a. Under control of the clock signal CLK, the conversion is realized bit by bit and fed into the transmission path 3.

The clock unit 5 also includes a transmission clock unit 7 provided with a first calculator 8. The first control signal TSa is also transmitted to the transmission clock unit 7. The calculator 8 is started by the first control signal TSa, and it is used for calculating those pulses of the clock signal CLK by which the data sequence is decoded bit by bit from the parallel to serial converter 1a. A second control signal TSb is formed in the transmission clock unit 7 by means of the first calculator 8, when the bit quantity of the whole data sequence is reached, and thus the whole data sequence is in serial format transmitted to the transmission path 3. The clock signal or a suitably modified pulse string thereof, as well as the second control signal TSb are transmitted from the clock unit 5 to the transmitter 2. By means of the clock signal or the like, the serial-format data sequence DS is read into the serial to parallel converter 2a of the receiver 2. By means of the second control signal TSb, the parallel-format data sequence red into the serial to parallel converter 2a is discharged in the converter in the original parallel format DR.

The clock 6 proper comprises a pulse generator and a multiplier 6b. The first sample clock signal NCLKa is fed into the multiplier 6b, from which there is obtained a clock signal CLK. The pulse frequency of the clock signal CLK is m times the pulse frequency of the first sample clock signal NCLKa. The integral m is defined according to the number of code elements in the data sequence. The number of code elements in a data sequence is standardized; it is for example one byte (8 code elements) or a multiple thereof. In the preferred embodiment of figure 1, the number of code elements contained in a data sequence is 8.

It is, however, pointed out that instead of the clock 6, there can be used any clock, most advantageously an external, existing clock that is fast enough. In that case the clock 6 need not be included in the clock unit 5, but the clock signal CLK and the first sample clock signal NCLKa are obtained from outside the arrangement according to the invention.

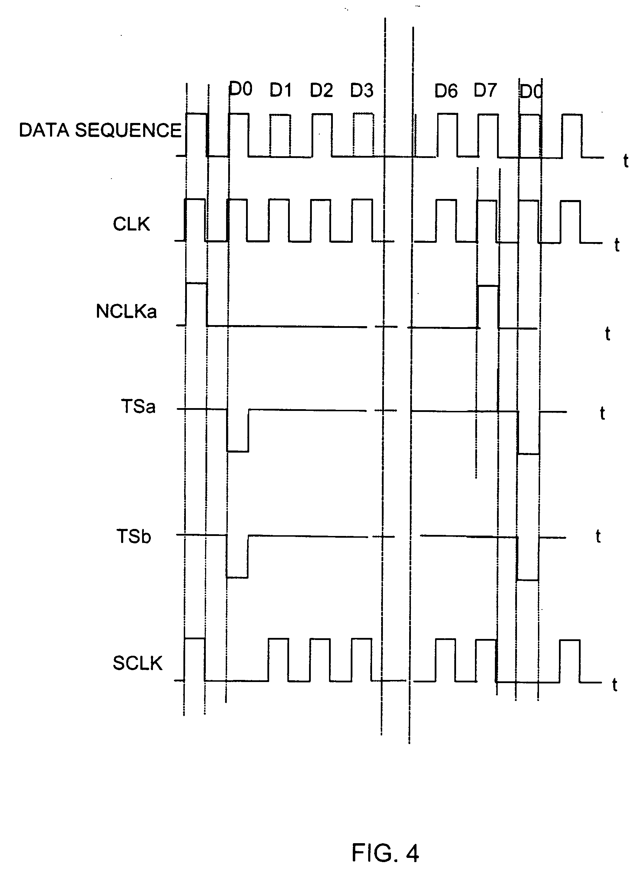

In addition, the clock unit includes a synchronizing unit 9, to which the clock signal CLK and the first sample clock signal NCLKa are fed. The first control signal TSa is obtained from the synchronizing unit 9, and it is delayed with respect to the first sample clock signal NCLKa. The first control signal TSa is preferably delayed by one clock signal pulse with respect to the first sample clock signal NCLKa, as is apparent from figure 4.

The transmitter 1 includes an input buffer memory 14. The parallel-format data sequence DR is read in the parallel format into the input buffer memory 14 under control of the first control signal TSa, and further into the parallel to serial converter 1a. Thereafter, with the pulses of the clock signals CLK that follow the first control signal TSa, of which there are 8 in this case (cf. figure 4), there is performed the conversion from parallel to serial in the parallel to serial converter 1a.

In addition to the first calculator 8, the transmission clock unit 7 advantageously comprises a clock signal modifying unit 10. This unit modifies the clock signal to be sent to the transmitter 2 into a format that is advantageous for controlling the reception of a serial-format data sequence and also for the whole transmission operation. In the clock signal modifying unit 10, the clock signal CLK proper is modified into a transmission clock signal SCLK so that from the clock signal SCLK, there are removed all pulse elements that are simultaneous with the control signals TSa, TSb. This in part improves the reliability of the transmission.

The means 4 for synchronizing the transmission and reception also include an auxiliary clock unit 11, provided in connection with the receiver 2. Into the auxiliary clock unit 11, there is fed the transmission clock signal SCLK and the second control signal TSb. The auxiliary clock unit 11 is provided with a second calculator 12 for calculating the pulses of the transmission clock signal SCLK. By means of said pulses, the serial-format data sequence DS is read in from the transmission path 3 bit by bit. The second control signal TSb is also fed in the second calculator 12. By means of the second control signal TSb, the second calculator 12 is reset, and there is given out a third control signal TSc, which is fed in the receiver 2, particularly into the serial to parallel converter 2a. By means of the third control signal TSc, the data sequence that was first fed in the serial format and then converted to the parallel format, is transmitted further from the converter.

In this embodiment, the auxiliary clock unit 11 also includes a unit 13 for producing a second sample clock signal. Into said unit, there are fed the transmission clock signal SCLK and the second control signal TSb, and they are used for forming the second sample clock signal NDKLb that corresponds to the original sample clock signal NCKLa.

The receiver 2 includes an output buffer memory 15 arranged in connection with the outputs of the serial to parallel converter 2a, and through said output buffer memory 15 the parallel format data sequences are fed in their original format DR further out of the transmitter 1. A third control signal TSc is fed into said output buffer memory 15, and by means of it, synchronized by it, the data sequence is transmitted further from the output buffer memory in parallel format.

The means 4 for synchronizing transmission and reception also include a second and a third transmission path 16, 17, by means of which the clock signal, in particular the transmission clock signal SCLK and the second control signal TSb are transmitted from the transmitter 1 to the receiver 2. The transmission paths 16, 17 are realized by means of single conductors in similar fashion as the first transmission path 3. The conductors can be electric conductors or for instance optical conductors.

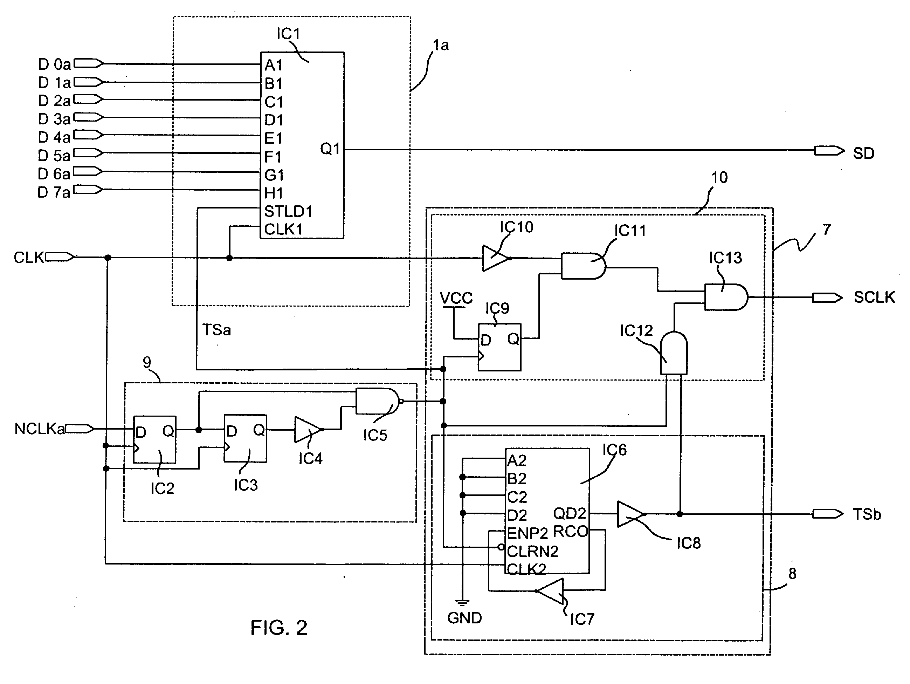

Part of the circuit diagram of a transmitter 1 according to the arrangement of the invention is illustrated in figure 2. In this embodiment, the parallel to serial converter 1a is realized by means of a shift register IC1. The shift register represents for instance the type 74165. To the inputs A1-H1 of the shift register, there is fed a parallel-format data sequence DR; D0ₐ, D1ₐ, D2ₐ, ..., D7ₐ that is read in the memory of the shift register IC1 at the first control signal TSa obtained from the synchronizing unit 9 of the clock unit 5. This signal TSa is fed from the output of the synchronizing unit 9 to the control input STLD 1 of the shift register.

The clock signal CLK obtained from the clock 6 proper or alternatively from an external clock is fed into the input CLK1 of the shift register IC1. The shift register IC1 starts transmitting the bits of the data sequence read in the memory in order to create a serial-format data sequence DS at the output Q1 in a rhythm defined by the clock signal CLK. When all bits of the data sequence are transmitted, the memory of the shift register IC1 is again cleared at the next first clearing signal TSa, and the next parallel-format data sequence DR is in turn red in the memory of the shift register.

One solution for realizing the synchronizing unit 9 belonging to the clock unit 5 is illustrated in figure 2. The synchronizing unit 9 is realized by means of logic circuits comprising D-type flip-flops IC2 and IC3, an inverter IC4 and a NAND gate IC5. Into the clock input of the D-type flip-flop IC2, there is fed a clock signal CLK, and to the D-input a first sample clock signal NCLKa. The output of the synchronizing unit 9, and simultaneously the output IC-5 of the AND gate, have a signal corresponding to the logic level 1, until at the rising edge of the first sample clock signal NCLKa, the D-type flip-flops IC2 and IC3 cause a change in the output, i.e. a pulse corresponding to the logic level 0, which thus represents the first control signal TSa.

The first calculator 8 of the transmission clock unit 7 is realized by means of a known integrated circuit IC6, such as type 74161. Into the clock input CLK2 thereof, there is fed a clock signal, and its pulses are calculated by the calculator. In the resetting input CLRN of the circuit IC6, there is in turn fed the first control signal TSa, by means of which the calculator is always reset when said control signal is detected. The calculator starts a new calculation cycle at the rate defined by the clock pulse CLK. When a pulse quantity corresponding to the code elements, i.e. bits in the data sequence is calculated, the operation of the calculator is interrupted, and from the output QD2 of the calculator there is given a signal via the inverter IC8; this signal is the second control signal TSb. The second control signal TSb is fed both to the clock signal modifying unit 10 and through the transmission path 17 to the auxiliary clock unit 11 provided in connection with the receiver 2.

In the embodiment of figure 2, the clock signal modifying unit 10 is realized by means of logic circuits, such as D-type flip-flop IC9, the inverter IC10 and the AND gates IC11, IC12 and IC13. Into the inputs of the clock signal modifying unit 10, there is fed the first and the second control signal TSa, TSb, and the clock signal CLK. The clock pulses of the clock signal CLK pass through the modifying unit 10 of the clock signal when neither of the first and second control signal TSa, TSb is detected. From the output of the clock signal modifying unit 10, there is now obtained the transmission clock signal SCLK which is the modified clock signal CLK, containing pulse strings in cycles; the pulses in the pulse string represent the same pulses by which from the parallel to serial converter 1a and particularly from the circuit IC1, there is decoded the parallel-format data sequence in serial format to the transmission path 3.

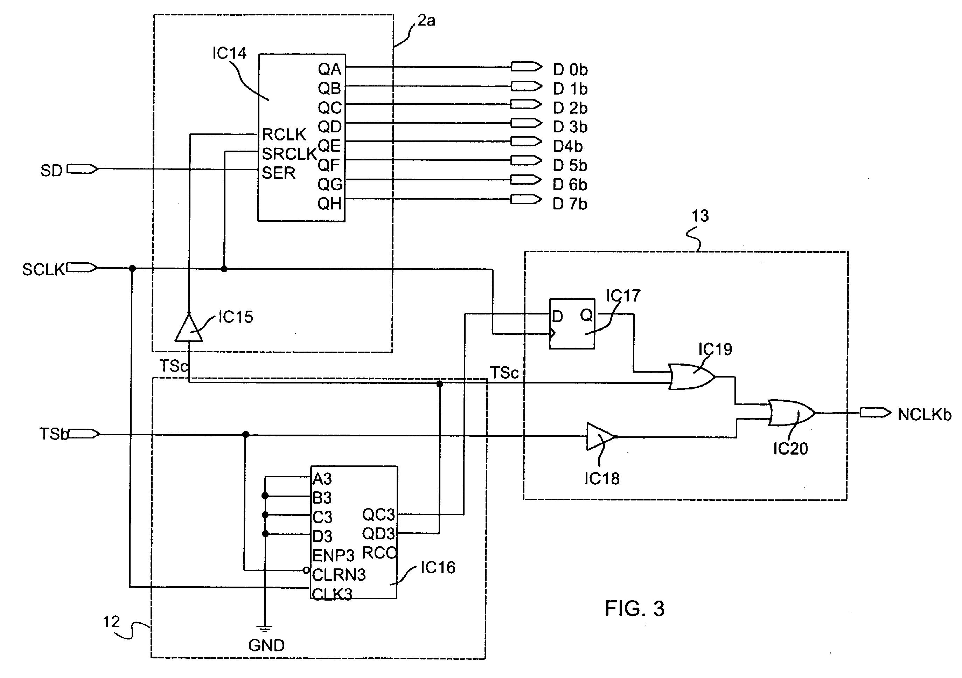

Part of the receiver 2 and connected auxiliary clock unit 11 according to the arrangement of the invention is illustrated as a circuit diagram in figure 3. In this embodiment, the serial to parallel converter 2a is realized by means of the shift register IC14. The shift register represents for instance the type 74595. The successive bits in the serial-format data sequence DS are received through the transmission path 3 via the input SER, and they are recorded in the memory. The transmission path 16 of the transmission clock signal SCLK is connected to the clock input RCLK of the shift register IC14. Under control of the transmission clock signal SCLK, the serial-format data sequence DS is read in the memory of the shift register. The auxiliary clock unit 11 is provided with another calculator 12 which is advantageously realized as an integrated calculator circuit IC16, representing for instance the type 74161. To the clock input CLK3 of the calculator, there is fed the transmission clock signal SCLK, and to the input CLRN3 there is fed a calculation interrupting signal, i.e. the second control signal TSb. The second calculator circuit IC16 starts the calculation of the pulses of the transmission clock signal SCLK when it has obtained the second control signal TSb from the clock unit 5 of the transmitter 1 and particularly from the transmission clock unit 7 via a third transmission path 17. When the pulse number corresponding to the code elements, i.e. bits in the data sequence is calculated, the calculation of the calculator 12 is interrupted, and output signals are given from the outputs QC3 and QD3 of the calculator. From the output QD3, there is obtained the third control signal TSc that is fed via the inverter IC15 to the shift register IC14. The third control signal TSc loads into the shift register the data sequence DS that was read into parallel format and received through the transmission path 3, at the outputs QA-QH of said shift register.

The unit 13 for creating the second sample clock signal comprises a D-type flip-flop IC17, an inverter IC18 and OR gates IC19 and IC20. Into the clock input of the D-type flip-flop IC17, there is fed the transmission clock signal SCLK, and to the D-input thereof there is in turn fed the output signal of the calculator circuit IC16, i.e. of the second calculator 12, at the output pole QC3. Said output signal is reversely proportional with the third control signal TSc obtained from the output pole QD3. In addition, into the unit 13 for creating the second sample clock signal, there is fed, via the inverter IC18, the second control signal TSb, and the third control signal TSc in turn is fed to the second input of the OR circuit IC19, to the first input of which there is connected the Q output of the D-type flip-flop IC17. By means of said input signals SCLK, TSb, TSc, in the unit 13 for creating the second sample clock signal there is reconstructed the second sample clock signal NCNKb corresponding to the first sample clock signal NCLKa.

The invention is not restricted to the above described embodiment only, but many modifications are possible within the scope of the inventive idea defined in the claims. Thus it is for example clear that the width of the parallel data sequence, i.e. the number m of the code elements, and simultaneously the width of the parallel route, can be even larger than the 8 bits presented in the example. The transmitted serial-format data sequence and the transmitted clock signal, particularly the transmission clock signal, can also be converted into a signal in the LVDS (Low Voltage Differential Signaling) format, in which case the interference resistance is increased even further.

## Claims

1. A method for transmitting digital data, in which method a data sequence is read in parallel format (DR) in the transmitter, it is converted to serial format (DS), transmitted to the transmission path and received in serial format in the transmitter, whereafter it is converted back to parallel format (DR), **characterized in that** according to the method, the conversion of the data sequence in the transmitter from parallel format (DR) to serial format (DS) is started by means of a first control signal (TSa), and the conversion is realized in a known fashion under control of a clock signal (CLK), and that the successive bits of the serial-format data sequence to be transmitted are calculated by the clock signal pulses, and that a second control signal (TSb) is formed when all bits of the data sequence are calculated and the data sequence has ended, and that to the transmitter there is transmitted a clock signal (SCLK) and a second control signal (TSb), and that in the receiver the serial-format (DS) data sequence received by means of the clock signal (SCLK) is converted into parallel format (DR), and with the second control signal (TSb) the parallel data sequence is decoded further in the original parallel format.

2. A method according to claim 1, **characterized in that** the frequency of the clock signal (CLK) is a multiple of a sample clock signal (NCLKa) corresponding to the number (m) of the code elements of the data sequence, and that the first control signal (TSa) is formed by synchronizing the first control signal by means of the clock signal sequence.

3. A method according to claim 1 or 2, **characterized in that** the clock signal (CLK) is prior to transmitting it to the receiver (2) converted into a transmission clock signal (SCLK), which is a modified clock signal from which the sequence parts corresponding to the first control signal (TSa) are removed.

4. A method according to claim 3, **characterized in that** in the receiver (2), the received pulses of the clock signal (SCLK) are calculated, and the calculation is terminated when the second control signal (TSb) is received, and that there is formed a third control signal (TSc), with which the received data sequence that is simultaneously converted to parallel format is decoded further in the parallel format.

5. A method according to any of the preceding claims, **characterized in that** the clock signal (SCLK) and the second control signal (TSb) are transmitted through the second and respectively the third transmission path (15, 16), such as a conductor, from the transmitter to the receiver.

6. An arrangement for transmitting digital data, comprising a transmitter (1) provided with a parallel to serial converter (1a) for converting a parallel-format data sequence (DR) into serial format (DS), and a receiver (2) provided with a serial to parallel converter (2a) for converting a serial-format data sequence (DS) into the original parallel format (DR), in which arrangement the serial-format data sequence is transmitted through a transmission path (3), such as a conductor, from the transmitter (1) to the receiver (2), **characterized in that** the arrangement includes means (4) for synchronizing the transmission and the reception, said means comprising a clock unit (5) arranged in connection with the transmitter (1) and comprises
- a synchronizing unit (9), to which there is fed the clock signal (CLK) and the first sample clock signal (NCLKa), and from which synchronizing unit there is obtained a first control signal (TSa) delayed by a clock signal sequence with respect to the first sample clock signal, with which first control signal (TSa) the parallel-format data sequence (DR) is read into a parallel to serial converter (1a), and its conversion to serial format is started, and
- a transmission clock unit (7) provided with a first calculator (8), which is started by the first control signal (TSa) and calculates those pulses of the clock signal (CLK) with which the data sequence is decoded.in serial format bit by bit from the parallel to serial converter (1), and by means of which there is formed a second control signal (TSb), when a predetermined bit quantity of the whole data sequence is reached, and to the receiver (2) there is transmitted the clock signal and the second control signal, by means of which the serial-format data sequence is read into the serial to parallel converter (2a) and the parallel-format data sequence is decoded out of the converter in the original parallel format (DR).

7. An arrangement according to claim 6, **characterized in that** the transmission clock unit (7) includes a clock signal modifying unit (10), where the transmission clock signal (SCLK) is formed of the clock signal (CLK) by removing sequence parts (pulses) that are simultaneous with the first and second control signal (TSa, TSb).

8. An arrangement according to claim 7, **characterized in that** the means (4) for synchronizing the transmission and reception also include an auxiliary clock unit (11) arranged in connection with the receiver (2), and that said auxiliary clock unit is provided with a second calculator (12) for calculating those pulses of the transmission clock signal (SCLK) with which into the serial to parallel converter (2a) there is read a data sequence in serial format bit by bit, and to which calculator there is fed the second control signal (TSb), and that by means of said signal, the calculator is reset and there is obtained a third control signal (TSc), and that the data sequence read by means of said signal is transmitted from the serial to parallel converter further in parallel format.

9. An arrangement according to claim 6, **characterized in that** the auxiliary clock unit (11) includes a unit (13) for creating a second sample clock signal (NCKLb), into which unit there is fed the transmission clock signal (SCLK) and the second control signal (TSb), and that by means of said signals, there is created a second sample clock signal (NCKLb) corresponding to the original first sample clock signal (NCKLa).

10. An arrangement according to any of the preceding claims 6 - 10, **characterized in that** the clock signal (SCLK) and the second control signal (TSb) are transmitted through the second and respectively the third transmission path (16, 17), such as a conductor, from the transmitter to the receiver.
